# EUROPEAN PATENT SPECIFICATION

(11) **EP 3 069 967 B1**
(45) Date of publication and mention of the grant of the patent: **11.07.2018**
(21) Application number: 16161204.9
(22) Date of filing: 18.03.2016
(51) Int. Cl.: B62H 3/00

(54) **DEVICE FOR PARKING BICYCLES**
VORRICHTUNG ZUM ABSTELLEN VON FAHRRÄDERN
DISPOSITIF DE STATIONNEMENT DE BICYCLETTES

(30) Priority: 18.03.2015 NL 2014483
(43) Date of publication of application: 21.09.2016
(73) Proprietor: MPB Concepts B.V., 5653 LC Eindhoven (NL)
(72) Inventor: MAAS, Koen Paul Marie, 3640 KINROOI (BE); PAULSSEN, Maurice Wilhelmus Leon, 6067 AH LINNE (NL)
(74) Representative: Algemeen Octrooi- en Merkenbureau B.V.

(56) References cited:
- EP-A2- 1 479 598
- WO-A1-2010/150834
- CA-A1- 2 369 551
- CN-A- 102 661 068
- DE-U1- 29 811 515
- JP-A- H10 114 287
- JP-A- 2001 123 693
- KR-B1- 101 376 156

## Description

The invention relates to a device for parking bicycles, according to the pre-amble of claim 1.

A device for parking bicycles is known, for example from EP2447136. The known device comprises a first row of a plurality of bicycle stand elements that are positioned side by side. These bicycle stand elements of said first row are directly accessible by a user such that a bicycle to be parked can be placed by the user in one of the plurality of bicycle stand elements. To increase the capacity of the device, the known device comprises a second row of a plurality of bicycle stand elements that are positioned side by side, wherein said second row is positioned at a vertical distance above said first row. For each bicycle stand of the second row, the device comprises a lifting unit with which a user can place a bicycle to be parked can be placed in the corresponding the bicycle stand elements of the second row.

From DE 298 11 515 U1 is considered the closest prior art and discloses all of the features of the preamble of claim 1, a parking aid device for two-storey bicycle parking systems is known. The parking aid device comprises a movable trolley, on which an insertion profile for a bicycle to be parked is provided. The insertion profile of the movable trolley may be placed in line with a parking profile of the second storey. The user may transport the bike from the insertion profile to the parking profile for parking the bike. Parking the bicycle with the known bicycle parking device is relatively complex for the user, and requires significant strength and skill.

JPH10114287 A discloses bicycle transfer equipment that is provided with a gutter-shaped rail with U-shaped cross section into which the wheel of a bicycle is inserted. The transfer equipment comprises a carriage which runs along the rail by a driving mechanism, an arm for bicycle front wheel clamping whose base end is fitted on the carriage, and a clamping mechanism fitted at the front end of the arm. The gutter-shaped rail is formed into a hill shape which involves a protruding part at its end half part.

It is therefore an object of the invention to provide a device of the aforementioned kind, and in particular a multi-tier bicycle parking, that is less complex and as a consequence less expensive, and in particular with which a bicycle can be parked in the device by a user in a simple, quick and reliable fashion.

To this end the invention provides a device according to claim 1. The device comprises a lifting unit is movable between at least two of the plurality of bicycle stand elements of the second row. The lifting unit is arranged in such a manner that the lifting unit can be placed by a user close to a selected of the at least two of the plurality of bicycle stand elements of the second row. This means that a single lifting unit is sufficient for servicing a plurality of bicycle stand elements of the second row. For example, it is possible to use a single lifting unit for two, three, four, five or more bicycle stand elements. By using only one lifting unit for a plurality of bicycle stand elements, the bicycle stand elements themselves may be embodied in a more simplified manner, and less material is required, since no separate lifting unit is required for each bicycle stand element. Manufacturing the device according to the invention is therefore less expensive. Additional advantage is that in total, less lifting units are required for the device, which leads to less effort with respect to inspection and maintenance.

According to the invention, the device comprises transferring means for transferring the bicycle to be parked to said one of the at least two of the plurality of bicycle stand elements of the second row. In particular, and in every claimed embodiment, each bicycle stand element of the second row comprises a respective transferring means, that is arranged to co-operate with the lifting unit.

The transferring means according to the invention may be substantially placed in line with one of the bicycle stand elements of the second row. The transferring means may be arranged to be displaceable in a sliding manner, in a direction towards the bicycle stand elements, in such a way that the transferring means can be positioned on the respective bicycle stand element. In case each of the plurality of bicycle stand elements of the second row is provided with a transferring means, then this transferring means can be taken out of the respective bicycle stand element by means of a guide, for example, and can be placed on the bicycle supporting means of the lifting unit.

With this, a less complex and less expensive multi-tier bicycle parking is obtained, with which the user may park his bicycle more easily, with less effort and less skill, compared to the prior art. With this the object of the invention is achieved.

Advantageous embodiments of the invention are subject of the dependent claims. In the following, these embodiments and advantages thereof will be explained.

In all claimed embodiments, the lifting unit comprises bicycle supporting means on which the bicycle to be parked can be placed.

In an embodiment, the lifting unit comprises guiding means.

In an embodiment, the lifting unit comprises lifting supporting means, in particular a counterweight. This makes it easier for a user to lift the bicycle to be parked vertically upwards towards the second row, since less weight has to be lifted.

The device according to the invention comprises, in an embodiment, at least a further lifting unit that is movable between, and can be placed by a user close to, at least two further bicycle stand elements of the plurality of bicycle stand elements of the second row. This allows a plurality of lifting units to be used for a device having a relatively large amount of parking spots.

According to an aspect, the invention relates to the use of the device according to the present invention. The use comprises the step of positioning the lifting unit, by a user, close to one of the at least two of the plurality of bicycle stand elements of the second row, and subsequently using the lifting unit for placing said bicycle in said one of the at least two of the plurality of bicycle stand elements of the second row.

According to an aspect, the invention relates to a lifting unit for apparent use in a device according to the invention. The lifting unit can be embodied as described above or below.

The invention will for be explained below, for illustration purposes, by means of some exemplary embodiments, which embodiments are shown in the accompanying figures. The figures show:
Fig. 1a - 1d - side views of a device according to the present invention, in different positions/times;
Fig. 2 - schematically, a perspective side view of a device according to the present invention;
Fig. 3 - schematically, a front view of a device according to the present invention;
Fig. 4a and 4b - side views of a device according to the present invention, in different positions/times;
Fig. 5 - a perspective side view of a particular embodiment of a device according to the present invention.

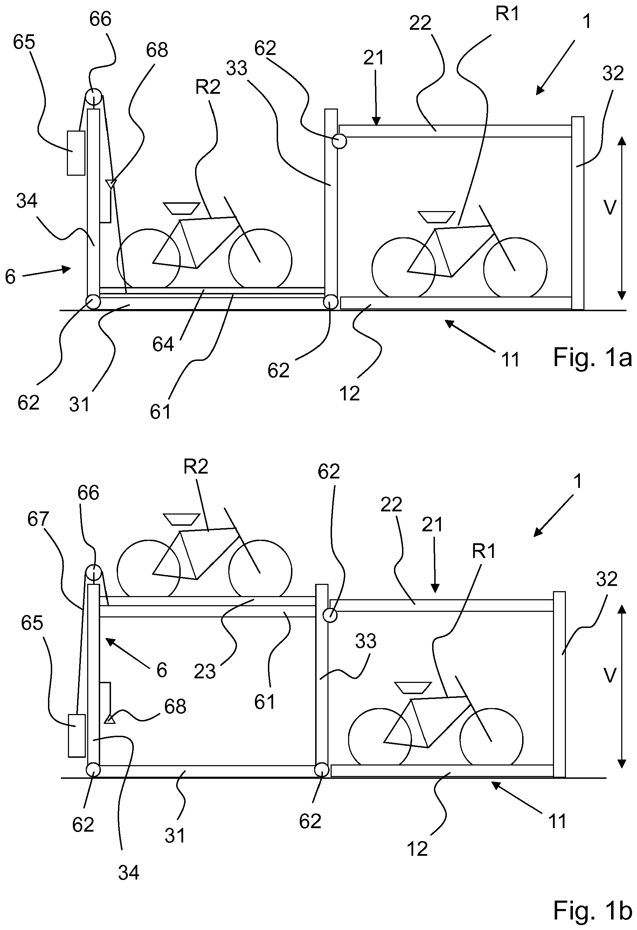

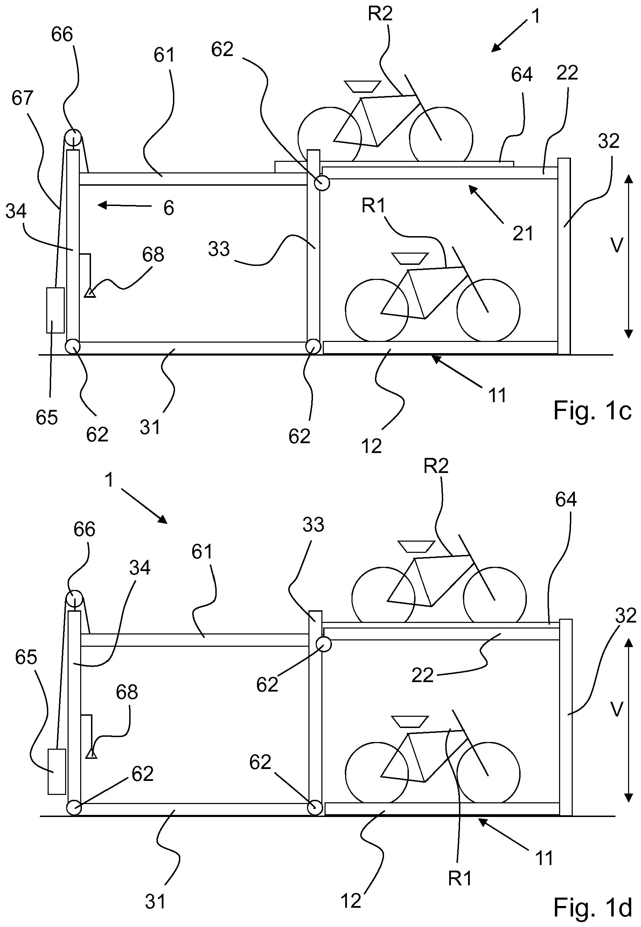

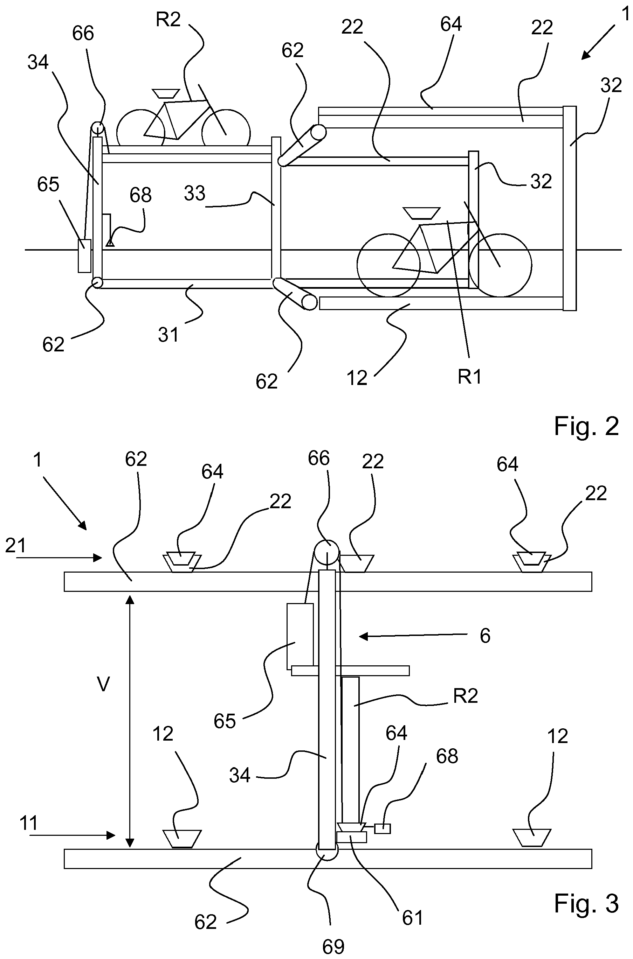

Now referring to Fig. 1a, a device 1 for parking bicycles R1, R2 is shown. The device comprises a frame 32, which is generally indicated with reference sign 32, having a first row 11 of a plurality of bicycle stand elements 12 that are positioned side by side, wherein in Fig. 1 only a single bicycle stand element 12 is visible. Fig. 2, however, more clearly shows how the bicycle stand elements 12 are positioned side by side. From this view, and the view of Fig. 1, it will be clear for those skilled in the art that a number of bicycles R1 may be placed in a side by side relationship in the device 1 according to the present invention, wherein adjacent bicycles are placed in a direction perpendicular to the plane formed by the drawing. The bicycle stand elements 12 of the first row 11 are directly accessible by the user. This means that a user that wants to park his bicycle R1 will be able to make a choice out of the available bicycle stand elements 12 of the first row 11, and will be able to drive his bicycle from the front side of the device 1 in order to park his bicycle (a movement from left to right in the figure 1a shown). After having parked his bicycle, the user will be able to withdraw his bicycle from the bicycle stand element 12 (a movement from right to left in the figure 1a shown). A bicycle to be parked R1 can thus be parked by the user in one of the plurality of bicycle stand elements 12.

The device 1 further comprises further comprises a second row 21 of a plurality of bicycle stand elements 22 that are positioned side by side, wherein said second row is positioned at a vertical distance above said first row 11. The device is provided with a lifting unit 6, which in the embodiment shown is provided near the entrance side of the bicycle stand element 12 of the first row 11, and with which a bicycle to be parked R2 can be placed by a user in one of the bicycle stand elements 22 of the second row 21. De lifting device 6 comprises, in the embodiment shown, a frame that is formed of two uprights 33, 34. A pulley 66 is connected to the frame. Along the pulley 66 a cable 67 is provided, and which is connected with one end to bicycle supporting means 61 on which transferring means 64 for a bicycle to be parked R2 are provided. On the other end of the cable 67 a counterweight 65 is provided. Operating means 68 in the form of a lever 68 are provided, with which the user may operate the lifting unit 6 for parking the bicycle to be parked in a bicycle stand element 22 of the second row 21.

As can be seen more clearly in fig. 2, the lifting unit 6 according to the present invention is movable between, and can be placed by a user close to, at least two of the plurality of bicycle stand elements 22 of the second row 21. This allows a single lifting unit 6 to be provided for parking a bicycle to be parked R2 in a plurality of bicycle stand elements 22 of the second row 21, and hence there is no need in providing a separate lifting unit 6 for each and every bicycle stand element 22 of the second row 21. This allows the device 1 according to the present invention to be manufactured in a less expensive way, and allows the device to be serviced in an easier and less expensive way. De user may position the lifting unit 6 near an available bicycle stand element 22 of the second row 21 of his choice. Subsequently, the user can operate the lifting unit 6 for parking his bicycle in the respective bicycle stand element 22.

The functioning of the lifting unit 6 will be explained in more detail with reference to Fig. 1a - 1d.

Fig. 1a shows a loading-position of the lifting unit 6. The user positions his bicycle in the transferring means 64 that are positioned on or above the bicycle supporting means 61. The bicycle may already be secured to parking elements (not shown here), such as for example a shackle or support, which is known per se to those skilled in the art, and of which a possible embodiment is described in Dutch Patent NL2005812 in name of the inventor. After parking the bicycle in the transferring means 64, the user needs to activate the lifting unit 6, by using lever 68, for lifting the bicycle upwards.

Fig. 1b shows the situation following the lifting of the bicycle R2. The transferring means 64 are substantially placed in line with one of the bicycle stand elements 22 of the second row 21. The transferring means 64 are arranged to be displaceable in a sliding manner, in a direction towards the bicycle stand elements 22, as shown in Fig. 1c, in such a way that the transferring means 64 can be positioned on the respective bicycle stand element 22.

The parking position of the bicycle R2 is shown in Fig. 1d. The transferring means 64 rest on the bicycle stand element 22, and the lifting unit 6 may be used again for parking a further bicycle.

It is noted in this respect that in the embodiments shown in Fig. 1a - 1d, each of the plurality of bicycle stand elements 22 of the second row 21 is provided with a transferring means 64. This transferring means can be taken out of the respective bicycle stand element 22 by means of a guide, and can be placed on the bicycle supporting means 61 of the lifting unit 6. After moving down the bicycle supporting means 61, the method that is explained with respect to Fig. 1a - 1d can be used for parking the bicycle.

In an alternative embodiment, it is conceivable that only the lifting unit 6 is provided with transferring means 64, and that use is made of a hook, anchor, or similar retaining means, near the bicycle stand element 22 for holding the bicycle on the bicycle stand element 22 in the position as shown in Fig. 1d. Such a construction is, however, less intuitive for the user, compared to the construction wherein each bicycle stand element 22 is provided with its own transferring means 64.

As can be seen very clearly in Fig. 2, the device 1 further comprises guiding means 62. By means of these guiding means 62, for example in the form of rails, guiding wheels, or other techniques known per se to those skilled in the art, the lifting unit 6 is movably displaceable, such that a plurality of the bicycle stand elements 22 of the second row 21 may be serviced by the lifting unit 6.

An embodiment, not shown in the figures, comprises at least a further lifting unit. A plurality of lifting units may be positioned next to each other, and each lifting unit may be arranged for servicing a specific plurality of bicycle stand elements. The lifting unit may be arranged to be unique for a certain plurality of bicycle stand elements, such that an arbitrary bicycle stand element may only be serviced by a single lifting unit. It is conceivable of course that an arbitrary bicycle stand element may be serviced by a plurality of lifting means.

Fig. 3 shows a front view of an embodiment of Fig. 1 of the device 1 according to the present invention. A first row 11 of the plurality (in this case a total of three) bicycle stand elements 12 that are positioned next to each other is visible here, as well as, positioned at a vertical position V above the first row 11, a second row 21 of a plurality of (in this case a total of three) bicycle stand elements 22 that are positioned next to each other. The lifting unit 6 having the bicycle supporting means 61 and the transferring means 64 provided thereon, is positioned near the middle bicycle stand element 22, such that the bicycle R2 is placeable thereon by means of the lifting unit. The lifting unit may be placed by the user near each of the three bicycle stand elements 22 of the second row 21, by means of guides 62.

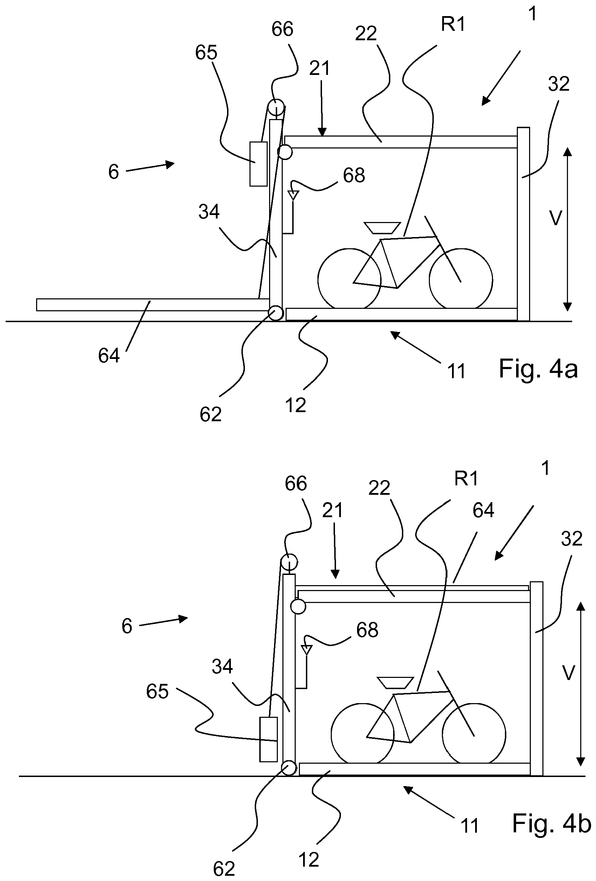

Fig. 4a shows an advantageous embodiment according to the present invention, which in particular is extremely compact, in particular when the lifting unit 6 is not used for lifting and/or parking a bicycle. The device 1 shown here substantially corresponds to the device 1a shown in Fig. 1a, with the difference that the lifting unit 6 is positioned more closer to the end/entrance of the bicycle stand elements 21, 22. The lifting unit 6 according to this embodiment furthermore ensures a direct coupling between the transferring means 64 and the lifting unit 6 with counterweight, such that the use of the bicycle supporting means is not necessary anymore. This simplifies the construction, and this facilitates the transition from the transferring means 64 of the bicycle supporting means 22 to the lifting means 6, and vice versa. The mean advantage of this embodiment is that in the unused state of the lifting unit, which state is shown in Fig. 4b, there are no large parts, in particular of the bicycle supporting means and/or the transferring means 64, that extend left of the upright 34 (See Fig. 4b in comparison to Fig. 1d). Additionally, in the embodiment according to Fig. 4b, the lifting force is close to the point where the actual transferring has to take place, which is advantageous.

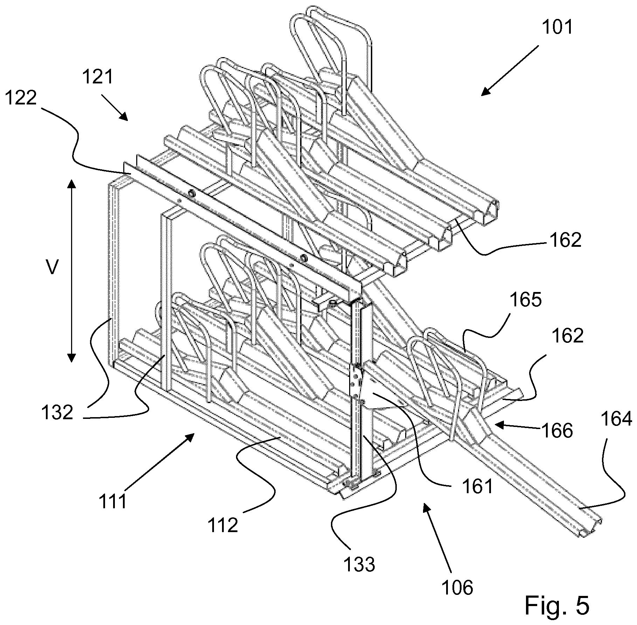

Fig. 5 presents a further possible embodiment according to the present invention in a potential loading-position of the lifting unit 106. Fig. 5 shows a single lifting unit 106 with a corresponding upright 133 of device 101, wherein the device comprises a first row 111 of a plurality of bicycle stand elements 112 that are positioned side by side and a second row 121 of a plurality of bicycle stand elements 122 that are positioned side by side. The device 101 further comprises a frame 132, which is generally indicated with reference sign 132.

Figure 5 shows that the transferring means 164 is supported by the supporting means 161 at a vertical position V that is approximately halfway between the first row 111 and the second row 121. The supporting means 161 of the lifting unit 106 can move along upright 133, thereby changing position V along upright 133. The upright 133 is part of the lifting unit 106 and can move horizontally along guides 162, such that a desired parking position, i.e. desired bicycle stand element 122 may be chosen by the user.

It should be noted that in an embodiment it is possible that the loading-position is anywhere along upright 133, when the supporting means 161 are arranged to be able to tip over towards row 111 from row 121, creating an angle between the transferring means 164 and the upright 133, such that a bicycle can be placed on top of the transferring means 164. When the supporting means 161 is aligned with bicycle stand element 122, the transferring means 164 may be slid inwards such that the transferring means 164 substantially overlaps bicycle stand element 122. The bicycle stand element 122 comprises a U-shaped profile, in which the transferring means 164 may be guided, in a manner known to those skilled in the art. As indicated in the figure, the transferring means 164 may comprise holding members 165 connected to and provided at a distance above the V-shaped surface of the transferring means 164. In this particular embodiment, transferring means 164 may further comprise an obstruction 166 for providing a barrier for a bicycle tire to move along, over the transferring means 164.

Thus from the above it follows that the lifting device comprises transferring means 164 for transferring the bicycle to be parked from said lifting unit 106 to said one of the at least two of the plurality of bicycle stand elements 122 of the second row 121. The lifting unit 106 may be positioned horizontally in line with a desired bicycle stand element 122 of the second row, the transferring means 164 may be removed from the bicycle stand element 122 and be placed on the lifting unit 106, then the transferring means 164 may be lowered and a bicycle may be placed on the transferring means 164. Subsequently, the transferring means 164 may be lifted and be guided onto the respective bicycle stand element 122. Thus, in effect, each bicycle stand element 122 of the second row 121 is provided with its own transferring means 164 that is able to cooperate with a single lifting unit 106.

Details of the lifting unit 106 of the embodiment of Fig. 5 may be the same as already described herein, or as described later, and will not be repeated here for reasons of conciseness.

It will be clear to those skilled in the art, that the invention is described above with reference to a few possible embodiments. Many modifications are conceivable within the scope of the appended claims. For instance, it is conceivable that the lifting mechanism of the lifting unit 6 is embodied in one of several ways. Next to the embodiment shown having a lever and/or handle in combination with a counterweight, other embodiments are conceivable as well, such as for instance manual and/or semi-automatical hydraulic, pneumatic, or mechanical systems.

Also, the transferring of the bicycle to the actual bicycle stand element can take place in many ways. Next to the transferring of the transferring means into the bicycle stand element as already described, for instance by means of a guide, such as for example using bearings, an embodiment using a reteaning means, such as for example a hook or clamp can be used. The bicycle stand element of the second row may be a gutter element, in which the transferring means, for example in the form of a smaller gutter, may be accommodated, in particular by means of a suitable bearing construction. The transferring means is provided for each bicycle stand element, which is preferred, although it is conceivable that in an embodiment not covered by the claims only the lifting unit is provided with transferring means that are used each time for parking the bicycle in the respective bicycle stand element.

In an embodiment, it is conceivable that further rows of bicycle stand elements are provided at a vertical distance of the first and/or second row.

The counterweight may be chosen in such a way that the total mass of the load to be lifted, that is to say mass of the combination of the bicycle and the transferring means and/or the bicycle supporting means, is compensated to a large extend. In an embodiment the counterweight has a mass in the range of 5 to 15 kg, more in particular in between 8 to 12 kg, such as for example 10 kg. This mass is based on the expected mass of the bicycle of approximately 23 kg, in which it is assumed that the user needs to lift a relatively small load of for example 4 to 10 kg for an improved user experience.

Lastly, it will be clear to those skilled in the art that the materials applied in the device may be materials that are generally known to those skilled in the art, such as steel and/or aluminium.

The invention is, as already described, not limited to the embodiments described and/or shown. The protection desired is determined by means of the claims attached.

## Claims

1. Device (1) for parking bicycles, said device comprising a first row (11) of a plurality of bicycle stand elements (12) that are positioned side by side, said bicycle stand elements (12) of said first row (11) being directly accessible by a user such that a bicycle to be parked can be placed by the user in one of the plurality of bicycle stand elements (12), wherein the device (1) further comprises a second row (21) of a plurality of bicycle stand elements (22) that are positioned side by side, wherein said second row is positioned at a vertical distance above said first row (11), and wherein the device comprises a lifting unit (6) with which a user can place a bicycle to be parked in one of the bicycle stand elements (22) of the second row, wherein the lifting unit (6) is movable between, and can be placed by a user close to, at least two of the plurality of bicycle stand elements (22) of the second row (21), and wherein the lifting unit (6) comprises bicycle supporting means (61) on which the bicycle (3) to be parked can be placed, **characterised in that** each bicycle stand element (22) of the second row comprises a respective transferring means (64), that is arranged for cooperating with the lifting unit (6), wherein the transferring means (64) is configured to be taken out of the respective bicycle stand element (22) by means of a guide, and is configured to be placed on the bicycle supporting means (61) of the lifting unit (6), for transferring the bicycle to be parked from said lifting unit (6) to said one of the at least two of the plurality of bicycle stand elements (22) of the second row (21).

2. Device (1) according to claim 1, wherein the lifting unit (6) comprises guiding means (62).

3. Device (1) according to any one of the previous claims, wherein the lifting unit (6) comprises lifting supporting means (65), in particular a counterweight.

4. Device (1) according to any one of the previous claims, comprising at least a further lifting unit (6) that is movable between, and can be placed by a user close to, at least two further bicycle stand elements (22) of the plurality of bicycle stand elements (22) of the second row (21).

5. Use of a device (1) according to any one of the previous claims, comprising the step of positioning the lifting unit (6), by a user, close to one of the at least two of the plurality of bicycle stand elements (22) of the second row (21), and subsequently using the lifting unit (6) for placing said bicycle in said one of the at least two of the plurality of bicycle stand elements (22) of the second row (21).

## Patentansprüche

1. Vorrichtung (1) zum Abstellen von Fahrrädern, wobei die Vorrichtung eine erste Reihe (11) einer Vielzahl von Fahrradständerelementen (12) die Seite an Seite angeordnet sind umfasst, wobei die Fahrradständerelemente (12) der ersten Reihe (11) direkt für einen Benutzer zugänglich sind, so dass ein abzustellendes Fahrrad von dem Benutzer in eines der Vielzahl von Fahrradständerelementen (12) platziert werden kann, wobei die Vorrichtung (1) zudem eine zweite Reihe (21) einer Vielzahl von Fahrradständerelementen (22) umfasst, die Seite an Seite angeordnet sind, wobei die zweite Reihe in einem vertikalen Abstand über der ersten Reihe (11) angeordnet ist, und wobei die Vorrichtung eine Hebeeinheit (6) umfasst, mit der ein Benutzer ein abzustellendes Fahrrad in eines der Fahrradständerelemente (22) der zweiten Reihe platzieren kann, wobei die Hebeeinheit (6) bewegbar zwischen, und durch den Benutzer nahe platzierbar zu wenigstens zwei der Vielzahl von Fahrradständerelementen (22) der zweiten Reihe (21) ist, und wobei die Hebeeinheit (6) ein Fahrradstützmittel (61) umfasst, auf dem das abzustellende Fahrrad (3) platziert werden kann,
**dadurch gekennzeichnet, dass**
jedes Fahrradständerelement (22) der zweiten Reihe ein entsprechendes Verlegungsmittel (64) umfasst, das für das Zusammenwirken mit der Hebeeinheit (6) angeordnet ist, wobei das Verlegungsmittel (64) ausgelegt ist aus dem entsprechenden Fahrradständerelement (22) mittels einer Führung herausgenommen zu werden, und ausgelegt ist auf dem Fahrradstützmittel (61) der Hebeeinheit (6) platziert zu werden, um das zu parkende Fahrrad von der Hebeeinheit (6) zu einem der wenigstens zwei der Vielzahl von Fahrradständerelementen (22) der zweiten Reihe (21) zu verlegen.

2. Vorrichtung (1) nach Anspruch 1, wobei die Hebeeinheit (6) ein Führungsmittel (62) umfasst.

3. Vorrichtung (1) nach einem der vorangegangen Ansprüche, wobei die Hebeeinheit (6) ein Hebeunterstützungsmittel (65), insbesondere ein Gegengewicht, umfasst.

4. Vorrichtung (1) nach einem der vorangegangen Ansprüche, umfassend wenigstens eine weitere Hebeeinheit (6) die bewegbar zwischen und durch den Benutzer nahe platzierbar zu wenigstens zwei weiteren Fahrradständerelementen (22) der Vielzahl von Fahrradständerelementen (22) der zweiten Reihe (21) ist.

5. Verwendung einer Vorrichtung (1) nach einem der vorangegangen Ansprüche, umfassend den Schritt der Anordnung der Hebeeinheit (6) durch einen Benutzer nahe zu einer der wenigstens zwei der Vielzahl von Fahrradständerelementen (22) der zweiten Reihe (21), und die folgende Verwendung der Hebeeinheit (6) zum Platzieren des Fahrrads in eines der wenigstens zwei der Vielzahl von Fahrradständerelementen (22) der zweiten Reihe (21).

## Revendications

1. Dispositif (1) de stationnement pour bicyclettes, ledit dispositif comprenant une première rangée (11) d'une pluralité d'éléments de support à bicyclettes (12) qui sont positionnés côte à côte, lesdits éléments de support à bicyclettes (12) de ladite première rangée (11) étant directement accessible à un utilisateur de sorte qu'une bicyclette à stationner puisse être placée par l'utilisateur dans l'un de la pluralité d'éléments de support à bicyclettes (12), où le dispositif (1) comprend en outre une deuxième rangée (21) d'une pluralité d'éléments de support à bicyclettes (22) qui sont positionnés côte à côte, où ladite deuxième rangée est positionnée à une distance verticale au-dessus de ladite première rangée (11), et où le dispositif comprend une unité de levage (6) avec laquelle un utilisateur peut placer une bicyclette à stationner dans l'un des éléments de support à bicyclettes (22) de la deuxième rangée, où l'unité de levage (6) est mobile entre au moins deux éléments de la pluralité d'éléments de support à bicyclettes (22) de la deuxième rangée (21) et peut être placée par un utilisateur près de ceux-ci, et où l'unité de levage (6) comprend un moyen porteur de bicyclette (61) sur lequel la bicyclette (3) à stationner peut être placée, **caractérisé en ce que** chaque élément de support à bicyclettes (22) de la deuxième rangée comprend un moyen de transfert respectif (64), qui est agencé pour coopérer avec l'unité de levage (6), où le moyen de transfert (64) est configuré pour être sorti de l'élément de support à bicyclettes respectif (22) au moyen d'un guide, et est configuré pour être placé sur le moyen porteur de bicyclette (61) de l'unité de levage (6), pour transférer la bicyclette à stationner de ladite unité de levage (6) audit élément des au moins deux éléments de la pluralité d'éléments de support à bicyclettes (22) de la deuxième rangée (21).

2. Dispositif (1) selon la revendication 1, dans lequel l'unité de levage (6) comprend un moyen de guidage (62).

3. Dispositif (1) selon l'une quelconque des revendications précédentes, dans lequel l'unité de levage (6) comprend un moyen de support de levage (65), en particulier un contrepoids.

4. Dispositif (1) selon l'une quelconque des revendications précédentes, comprenant au moins une unité de levage supplémentaire (6) qui est mobile entre au moins deux éléments de support à bicyclettes supplémentaires (22) de la pluralité d'éléments de support à bicyclettes (22) de la deuxième rangée (21) et qui peut être placée par un utilisateur près de ceux-ci.

5. Utilisation d'un dispositif (1) selon l'une quelconque des revendications précédentes, comprenant l'étape de positionnement de l'unité de levage (6), par un utilisateur, prés de l'un des au moins deux éléments de la pluralité d'éléments de support à bicyclettes (22) de la deuxième rangée (21), et d'utilisation ensuite de l'unité de levage (6) pour placer ladite bicyclette dans ledit élément des au moins deux éléments de la pluralité d'éléments de support à bicyclettes (22) de la deuxième rangée (21).
